# EUROPÄISCHE PATENTANMELDUNG

(11) **EP 0 984 196 A1**
(43) Veröffentlichungstag der Anmeldung: **08.03.2000**
(21) Anmeldenummer: 99109199.2
(22) Anmeldetag: 10.05.1999
(51) Int. Cl.: F16F 15/14, F16F 15/10, F16F 15/12

(54) **Drehzahladaptiver Schwingungstilger**

(30) Priorität: 11.07.1998 DE 19831157
(71) Anmelder: Firma Carl Freudenberg, 69469 Weinheim (DE)
(72) Erfinder: Eckel, Hans-Gerd Dr., 69514 Laudenbach (DE); Röhrig, Bernhard, 64646 Heppenheim (DE); Sander, Hans-Gerhard, 69469 Weinheim (DE)

(57) **Zusammenfassung**

Drehzahladaptiver Schwingungstilger für eine um eine Achse (1) rotierbare Welle, umfassend ein Nabenteil (2), auf dem eine Anzahl in Umfangsrichtung benachbarter Trägheitsmassen (3) jeweils in zwei in Umfangsrichtung benachbarten Halterungen in Gehäuseteilen (6, 7) aufgenommen ist, die auf gegensinnig gekrümmten Kurvenbahnen (14, 22) der Trägheitsmassen (3) und des Nabenteils (2) derart abwälzbare Bolzen (11) umfassen, daß sich bei Einleitung von eine Rotationsbewegung überlagernden Drehschwingungen eine Verringerung des Abstandes der Trägheitsmassen (3) von der Achse (1) im Zuge von gekrümmten Bewegungsbahnen ergibt, wobei das Nabenteil (2) axial geteilt ist und zwei Teilnaben (4, 5) aufweist, und wobei die Teilnaben (4, 5) radial nach außen verlängert sind und einstückig mit den Gehäuseteilen (6, 7) ausgebildet sind.

## Beschreibung

### Technisches Gebiet

Die Erfindung betrifft einen drehzahladaptiven Schwingungstilger für eine um eine Achse rotierbare Welle, umfassend ein Nabenteil, auf dem eine Anzahl in Umfangsrichtung benachbarter Trägheitsmassen jeweils in zwei in Umfangsrichtung benachbarten Halterungen in Gehäuseteilen aufgenommen ist, die auf gegensinnig gekrümmten Kurvenbahnen der Trägheitsmassen und des Nabenteils derart abwälzbare Bolzen umfassen, daß sich bei Einleitung von eine Rotationsbewegung überlagernden Drehschwingungen eine Verringerung des Abstandes der Trägheitsmassen von der Achse im Zuge von gekrümmten Bewegungsbahnen ergibt.

### Stand der Technik

Ein solcher drehzahladaptiver Schwingungstilger ist aus der DE 196 31 989 C1 bekannt.

An Wellen von periodisch arbeitenden Maschinen, beispielsweise an der Kurbelwelle einer Verbrennungskraftmaschine treten die Rotationsbewegung überlagernde Drehschwingungen auf, deren Frequenz sich mit der Drehzahl der Welle ändert. Zur Verringerung dieser Drehschwingungen können Schwingungstilger vorgesehen werden. Den Drehschwingungstilgern liegt das Prinzip zugrunde, daß die Trägheitsmassen fliehkraftbedingt bestrebt sind, die Achse bei Einleitung einer Drehbewegung in größtmöglichem Abstand zu umkreisen. Drehschwingungen, welche die Drehbewegung überlagern, führen zu einer Relativbewegung der Trägheitsmassen, wobei die Trägheitsmassen in radialer Richtung nach innen bewegt werden. Der drehzahladaptive Schwingungstilger hat eine der Drehzahl proportionale Eigenfrequenz, so daß Drehschwingungen mit in gleicher Weise drehzahlabhängigen Frequenzen über einen großen Drehzahlbereich tilgbar sind. Nachteil des bekannten Schwingungstilger ist jedoch, daß dessen Herstellung aufwendig und in Folge dessen teuer ist.

### Darstellung der Erfindung

Die der Erfindung zugrundeliegende Aufgabe besteht darin, die Herstellungskosten zu senken.

Die Aufgabe wird bei einem drehzahladaptiven Schwingungstilger der eingangs genannten Art dadurch gelöst, daß das Nabenteil axial geteilt ist und zwei Teilnaben aufweist, daß die Teilnaben radial nach außen verlängert sind und einstückig mit den Gehäuseteilen ausgebildet sind.

Durch die erfindungsgemäße Gestaltung des Nabenteils kann die Herstellung des drehzahladaptiven Schwingungstilgers erheblich vereinfacht werden. Jede der radial nach außen verlängerten und einstückig mit den Gehäuseteilen ausgebildeten Teilnaben kann auf einfache Weise hergestellt werden.

Als besonders vorteilhaft hat es sich erwiesen, daß die Teilnaben zumindest teilweise aus Tiefziehblech oder Kunststoff bestehen. Aus Tiefziehblech hergestellte Teilnaben des drehzahladaptiven Schwingungstilger lassen sich auch in größeren Stückzahlen kostengünstig herstellen.

Indem die Teilnaben zumindest im Bereich des Außenumfangs gegeneinander insbesondere durch einen Dichtring aus polymerem Werkstoff abgedichtet sind, wird auf einfache Weise eine Abdichtung erzielt, welche den Einsatz eines Schmiermittels in dem Gehäuse ermöglicht.

Vorteilhafterweise ist der Dichtring als O-Ring ausgebildet.

Gemäß einer anderen Ausführungsform der Erfindung ist vorgesehen, daß die Teilnaben zumindest im Bereich des Außenumfangs flüssigkeitsdicht verschweißt sind. Hierdurch wird nicht nur eine dauerhafte Dichtheit erzielt, sondern auch die Stabilität des Nabenteils erhöht.

Gemäß einer besonders vorteilhaften Ausgestaltung ist vorgesehen, daß die Teilnaben durch wenigstens einen die Achse umschließenden Tragring verstärkt sind. Dieser nimmt die im Betrieb auftretenden hohen Kräfte auf und leitet sie gleichmäßig in das Nabenteil ein. Das Nabenteil selbst kann aufgrund dieser Maßnahme einfacher und leichter ausgeführt werden.

Die Herstellbarkeit wird dadurch weiter vereinfacht, daß der wenigstens eine Tragring durch ein metallisches Stanz- oder Tiefziehteil gebildet ist.

Vorteilhafterweise weist der wenigstens eine Tragring Ausnehmungen zum Einfügen von Lagerschalen auf, in denen die Bolzen abwälzbar sind. Dies hat den Vorteil, daß die hochbelasteten Lagerschalen separat aus einem Material hergestellt werden können, das an die auftretenden Belastungen angepaßt ist.

Eine weitere Vereinfachung der Herstellung wird auch dadurch erzielt, daß im Bereich der Ausnehmungen zwischen dem Tragring und den Lagerschalen Ausgleichsschichten aus polymerem Werkstoff angeordnet sind. Die Ausgleichsschichten aus polymerem Werkstoff erlauben einen Toleranzausgleich zwischen den Lagerschalen und dem Tragring.

Indem die Lagerschalen durch die Ausgleichsschichten mit dem Tragring im Bereich der Ausnehmungen verklebt sind, ergibt sich eine zuverlässige Festlegung der Lagerschalen in den Ausnehmungen.

Die Herstellung wird dadurch weiter vereinfacht, daß die Ausgleichsschichten einstückig mit dem die Teilnaben gegeneinander abdichtenden Dichtring ausgebildet sind.

Schließlich kann eine Herstellungsvereinfachung auch dadurch erzielt werden, daß die Ausgleichsschichten einstückig in eine Kappe übergehen, die zumindest eine Gehäusehälfte in einem Teilbereich ersetzt. Aufgrund dieser Gestaltung kann das Nabenteil besonders einfach herstellbar ausgebildet werden. Die Kappe, welche die Gehäusehälfte in einem Teilbereich ersetzt, kann in einem einzigen Verfahrensschritt mit den Ausgleichsschichten hergestellt werden.

### Kurzbeschreibung der Zeichnungen

Der Gegenstand der Erfindung wird nachfolgend anhand der Zeichnungen weiter verdeutlicht. Es zeigen:
- Figur 1: einen Querschnitt durch einen drehzahladaptiven Schwingungstilger,
- Figur 2: eine Draufsicht auf einen drehzahladaptiven Schwingungstilger,
- Figur 3: eine Draufsicht auf eine Tilgermasse,
- Figur 4: eine Ansicht eines drehzahladaptiven Schwingungstilgers gemäß einer zweiten Ausführungsform,
- Figur 5: einen Querschnitt durch den Schwingungstilger aus Figur 4,
- Figur 6: eine Ansicht eines drehzahladaptiven Schwingungstilgers gemäß einer dritten Ausführungsform und
- Figur 7: einen Querschnitt durch den Schwingungstilger aus Figur 6.

### Ausführung der Erfindung

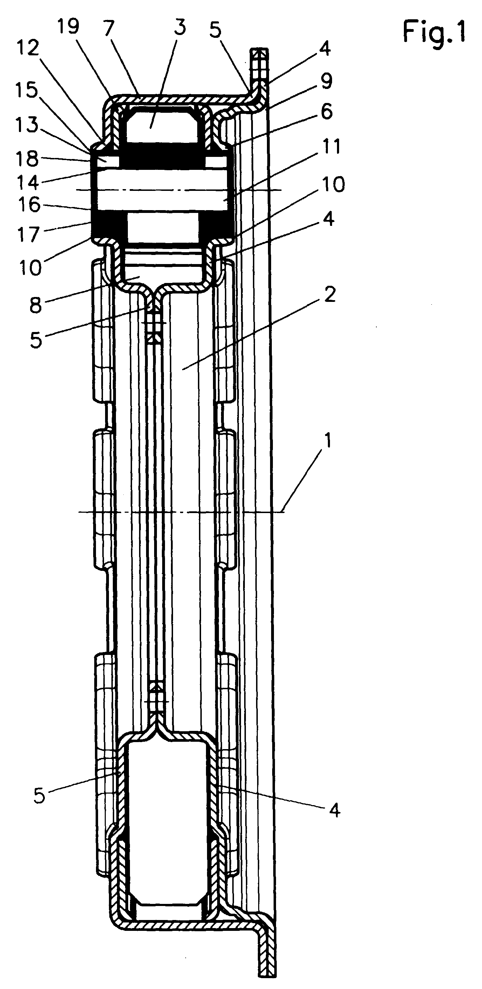

Figur 1 zeigt einen drehzahladaptiven Schwingungstilger für eine um eine Achse 1 rotierbare Welle (nicht dargestellt), umfassend ein Nabenteil 2, auf dem eine Anzahl von Trägheitsmassen 3 gelagert ist.

Das Nabenteil 2 ist axial geteilt und weist zwei Teilnaben 4 und 5 auf, welche in Richtung der Achse 1 nebeneinander angeordnet sind. Die Teilnaben 4 und 5 sind in radialer Richtung nach außen verlängert und mit Gehäusehälften 6 und 7 einstückig ausgebildet, welche einen ringförmigen Hohlraum 8 umschließen. Die Teilnaben 4 und 5 sind aus Tiefziehblech hergestellt und können im Bereich des Außenumfangs, zum Beispiel am Verbindungsflansch 9 der Teilnaben 4 und 5 durch einen Dichtring aus polymeren Werkstoff abgedichtet sein. Als Dichtring kann insbesondere ein O-Ring verwendet werden. Eine Abdichtung kann auch dadurch erzielt werden, daß die Teilnaben 4 und 5 im Bereich des Außenumfangs flüssigkeitsdicht verschweißt sind.

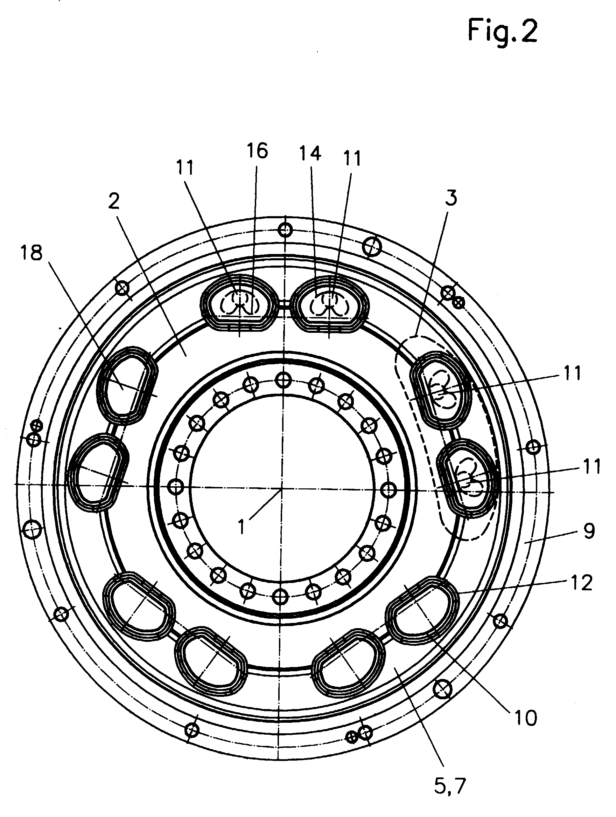

Um eine Lagerung der Trägheitsmasse 3 in dem Nabenteil 2 zu ermöglichen, weisen die Teilnaben 4 und 5 Ausnehmungen 10 zur Aufnahme der Endabschnitte des Bolzens 11 auf. Die beispielsweise durch Stanzen erzeugten Ausnehmungen 10 werden durch einen jeweils nach außen weisenden umgebogenen Rand 12 begrenzt. In jeder Ausnehmung 10 ist ein Einsatzstück 13 aufgenommen, welches eine Kurvenbahn bildet, auf der der Bolzen 11 abwälzt. Das Einsatzstück 13 ist in der Ausnehmung 10 auf einer Toleranzausgleichsschicht 15 angeordnet. Bei der Herstellung des Schwingungstilgers wird zunächst das Einsatzstück 13 in die Ausnehmungen 10 eingesetzt und durch ein Werkzeug positioniert. Darauf wird die Ausgleichsschicht 15 aus polymeren Werkstoff eingeformt. Die Ausgleichsschicht 15 ist darüber hinaus einstückig ausgebildet mit einer eine Führungsbahn 16 bildenden Schicht 17. Die Kurvenbahn 14 und die Führungsbahn 16 haben wie in Figur 2 erkennbar ist, die Form eines zur Achse 1 hin offenen U.

Mit der Ausgleichsschicht 15 und der Schicht 17 ist auch eine Deckschicht 18 einstückig ausgebildet, welche die Ausnehmungen 10 nach außen abschließt und ein axiales Verschieben des Bolzens 11 verhindert.

In axialer Richtung zwischen den an den Enden des Bolzens 11 angeordneten Einsatzstücken 13 sind die Trägheitsmassen 3 auf dem Bolzen 11 gelagert. Auf der in radialer Richtung außenliegenden Seite des Bolzens 11 ist in axialer Richtung beiderseits der Trägheitsmassen 3 jeweils ein Tragring 19 angeordnet. Dieser ist als umlaufender Ring ausgebildet und nimmt die beim Betrieb an dem Bolzen 11 auftretenden Zentrifugalkräfte auf.

Bei der in Figur 2 dargestellten Draufsicht auf einen erfindungsgemäßen Drehschwingungstilger ist die Anordnung und Lage des auf den Kurvenbahnen 14 abwälzenden Bolzens 11 sowie der Führungsbahn 16 gestrichelt angedeutet. Darüber hinaus verdeutlicht Figur 2 die Anordnung der nachfolgend näher beschriebenen Trägheitsmassen 3 zu dem Nabenteil 2.

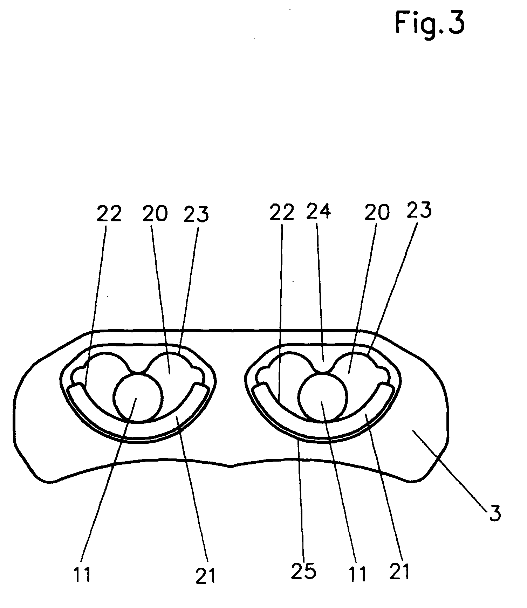

Aus Figur 3 ergibt sich daß die Trägheitsmassen 3 zwei Ausnehmungen 20 aufweisen, in der jeweils ein Bolzen 11 zur Lagerung der Trägheitsmassen 3 an dem Nabenteil 2 aufgenommen ist. In den Ausnehmungen 20 ist jeweils ein Einsatzstück 21 aufgenommen. Dieses bildet eine in radialer Richtung nach außen geöffnete Kurvenbahn 22. Somit sind die Kurvenbahn 22 der Trägheitsmasse 3 und die Kurvenbahn 14 des Nabenteils 2 gegensinnig ausgerichtet.

Auf der der Kurvenbahn 22 gegenüberliegenden Seite ist in der Ausnehmung 20 eine Führungsbahn 23 ausgebildet, welche die Relativbewegung zwischen den Bolzen 11 und der Trägheitsmasse 3 in radialer Richtung nach innen begrenzt.

Bei der in Figur 3 dargestellten Ausführungsform der Trägheitsmasse 3 wird die Führungsbahn 23 durch eine Schicht 24 aus polymerem Werkstoff gebildet. Dabei ist die Führungsschicht 24 einstückig mit einer Toleranzausgleichsschicht 25 ausgebildet, welche zwischen dem Einsatzstück 21 und der Trägheitsmasse 3 in der Ausnehmung 20 angeordnet ist.

Die Ausbildung und Anordnung der Einsatzstücke 13, der Kurvenbahn 14 und der die Führungsbahn 16 bildenden Schicht 17 des Nabenteils 2 kann der Ausbildung des Einsatzstücks 21, der Kurvenbahn 22 und der die Führungsbahn 23 tragende Schicht 24 der Trägheitsmasse 3 entsprechen, wobei die genannten Elemente des Nabenteils 2 und der Trägheitsmassen 3 gegensinnig angeordnet sind.

Durch eine solche Anordnung wird erreicht, daß sich die Trägheitsmassen 3 relativ zu dem Nabenteil 2 unter Ausführung einer Pendelbewegung verschieben können. Dabei wälzen die Bolzen 11 auf den gegensinnig gekrümmten Kurvenbahnen 14 und 22 ab. Beim Auftreten von einer eine Rotationsbewegung überlagernden Drehschwingung werden die Trägheitsmassen 3 aus ihrer in Figur 2 gestrichelt dargestellten Mittelposition relativ zu dem Nabenteil 2 translatorisch entlang einer gekrümmten Bewegungsbahn bewegt, welche durch die Führungsbahnen 14, 22 und die Bolzen 11 bestimmt sind. Auf dieser Weise kommt es zu einer Verringerung des Abstandes der Trägheitsmassenschwerpunkte von der Achse 1.

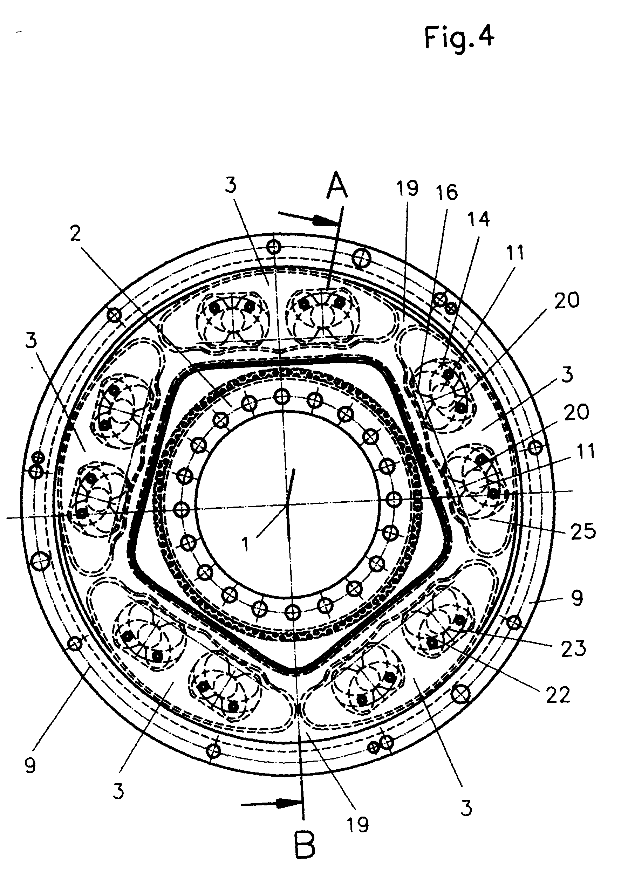

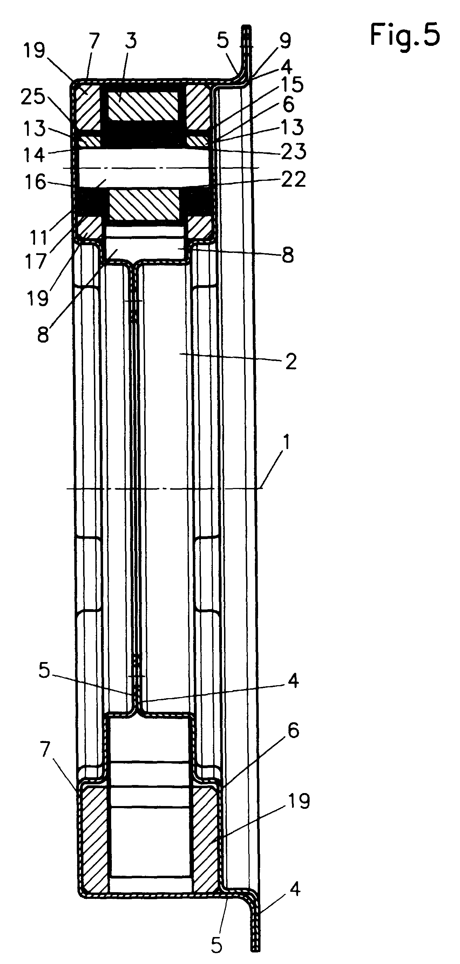

Figur 4 zeigt eine Draufsicht auf den Schwingunstilger gemäß einer zweiten Ausführungsform, wobei die Lage der Trägheitsmassen 3, der Bolzen 11 etc. gestrichelt dargestellt ist. Figur 5 zeigt einen Schnitt entlang der Linie A - B in Figur 4.

Bei der in Figur 4 und 5 dargestellten Ausführungsform der Erfindung weisen die Teilnaben 4, 5 keine Ausnehmungen 10 auf. Die Teilnaben 4 und 5 sind in diesem die Gehäuseteile 6 und 7 bildenden Bereich durchgehend geschlossen ausgebildet, so daß eine Abdichtung des Hohlraums 8 in diesem Abschnitt nicht erforderlich ist. Die Funktion der Ausnehmungen 10 bei der in Figuren 1 und 2 dargestellten Ausführungsform wird durch die Ausnehmungen 25 übernommen, welche in den Tragringen 19 ausgebildet sind. In den Ausnehmungen 25 ist wie bei der zu Figur 1 und 2 beschriebenen Ausführungsform ein eine Kurvenbahn 14 bildendes Einsatzstück 13 über eine Ausgleichsschicht 15 einsetzbar. Der Kurvenbahn 14 liegt die durch die Schicht 17 gebildete Kurvenbahn 16 gegenüber. Dabei ist das Einsatzstück 13 als Lagerschale für den Bolzen 11 ausgebildet. Zwischen dem Tragring 19 und den die Lagerschalen bildenden Einsatzstücken 13 ist im Bereich der Ausnehmungen 25 eine Ausgleichsschicht aus polymerem Werkstoff angeordnet. Durch diese sind die Lagerschalen mit dem Tragring 19 im Bereich der Ausnehmungen 25 verklebt. Die Herstellung des Tragrings wird dadurch besonders kostengünstig, daß die Tragringe 19 durch metallische Stanz- oder Tiefziehteile gebildet sind.

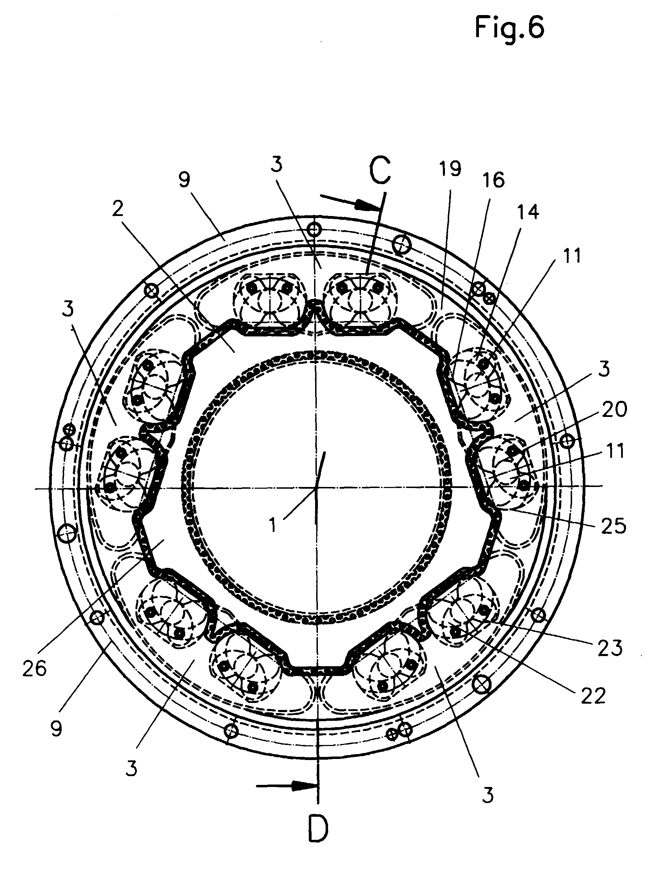

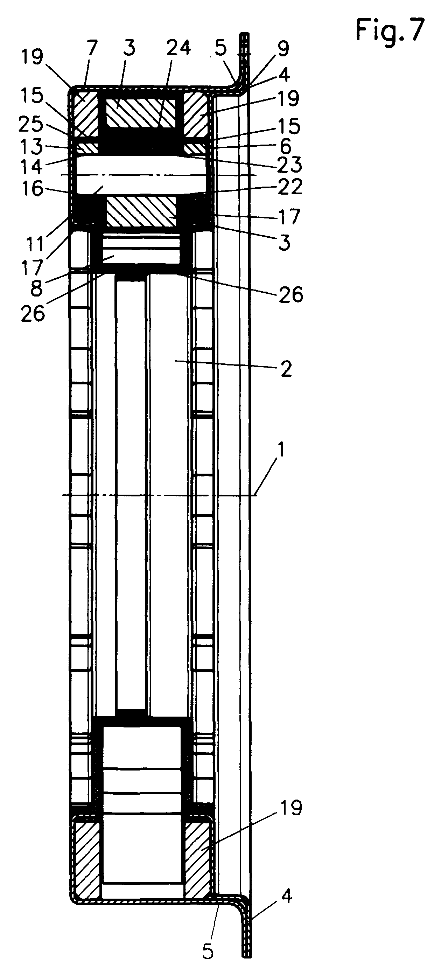

Figur 6 zeigt eine Draufsicht auf den Schwingungstilger gemäß einer dritten Ausführungsform, wobei die Lage der Trägheitsmassen 3, der Bolzen 11 etc. gestrichelt dargestellt ist. Figur 7 ist ein Schnitt entlang der Linie C - D in Figur 6.

Bei der in Figur 6 und 7 dargestellten Ausführungsform eines Drehschwingungstilgers ist die Ausgleichsschicht 15 einstückig mit der die Führungsbahn 16 bildenden Schicht 17 ausgebildet. Letztere geht an ihrer in radialer Richtung innen liegenden Seite in einen Kappenabschnitt 26 über, der zumindest ein Gehäuseteil 6, 7 in einem Teilbereich ersetzt. Vorliegend weist jede Teilnabe 4, 5 einen Kappenabschnitt 26 auf, wobei die Kappenabschnitte 26 durch ineinandergreifende Nasen miteinander verbunden sind. Die Kappenabschnitte 26 ersetzten damit die Gehäuseteile 6, 7 in dem der Achse 1 zugewandten Teilbereich. Der besondere Vorteil dieser Ausgestaltung ist, daß die Teilnaben 4, 5 einfacher gestaltet und damit kostengünstiger hergestellt werden können. Aufgrund der einstückigen Ausbildung der Ausgleichsschicht 15, der die Führungsbahn 16 tragenden Schicht 17 und der Kappenabschnitte 26 können diese Teile kostengünstiger in einem einzigen Verfahrensschritt hergestellt werden.

## Patentansprüche

1. Drehzahladaptiver Schwingungstilger für eine um eine Achse (1) rotierbare Welle, umfassend ein Nabenteil (2), auf dem eine Anzahl in Umfangsrichtung benachbarter Trägheitsmassen (3) jeweils in zwei in Umfangsrichtung benachbarten Halterungen in Gehäuseteilen (6, 7) aufgenommen ist, die auf gegensinnig gekrümmten Kurvenbahnen (14, 22) der Trägheitsmassen (3) und des Nabenteils (2) derart abwälzbare Bolzen (11) umfassen, daß sich bei Einleitung von eine Rotationsbewegung überlagernden Drehschwingungen eine Verringerung des Abstandes der Trägheitsmassen (3) von der Achse (1) im Zuge von gekrümmten Bewegungsbahnen ergibt, **dadurch gekennzeichnet,** daß das Nabenteil (2) axial geteilt ist und zwei Teilnaben (4, 5) aufweist, daß die Teilnaben (4, 5) radial nach außen verlängert sind und einstückig mit den Gehäuseteilen (6, 7) ausgebildet sind.

2. Schwingungstilger nach Anspruch 1, dadurch gekennzeichnet, daß die Teilnaben (4, 5) zumindest teilweise aus Tiefziehblech oder Kunststoff bestehen.

3. Schwingungstilger nach Anspruch 1 oder 2, dadurch gekennzeichnet, daß die Teilnaben (4, 5) zumindest im Bereich des Außenumfangs gegeneinander insbesondere durch einen Dichtring aus polymerem Werkstoff abgedichtet sind.

4. Schwingungstilger nach Anspruch 3, dadurch gekennzeichnet, daß der Dichtring als O-Ring ausgebildet ist.

5. Schwingungstilger nach Anspruch 1 oder 2, dadurch gekennzeichnet, daß die Teilnaben (4, 5) zumindest im Bereich des Außenumfangs flüssigkeitsdicht verschweißt sind.

6. Schwingungstilger nach einem der Ansprüche 1 bis 5, dadurch gekennzeichnet, daß die Teilnaben (4, 5) durch wenigstens einen die Achse (1) umschließenden Tragring (19) verstärkt sind.

7. Schwingungstilger nach Anspruch 6, dadurch gekennzeichnet, daß der wenigstens eine Tragring (19) durch ein metallisches Stanz- oder Tiefziehteil gebildet ist.

8. Schwingungstilger nach Anspruch 6 oder 7, dadurch gekennzeichnet, daß der wenigstens eine Tragring (19) Ausnehmungen (25) zum Einfügen von Lagerschalen bildenden Einsatzstücken (13) aufweist, in denen die Bolzen (11) abwälzbar sind.

9. Schwingungstilger nach Anspruch 8, dadurch gekennzeichnet, daß im Bereich der Ausnehmungen (25) zwischen dem Tragring (19) und den Einsatzstücken (13) Ausgleichsschichten (15) aus polymerem Werkstoff angeordnet sind.

10. Schwingungstilger nach Anspruch 9, dadurch gekennzeichnet, daß die Einsatzstücke (13) durch die Ausgleichsschichten (15) mit dem Tragring (19) im Bereich der Ausnehmungen (25) verklebt sind.

11. Schwingungstilger nach Anspruch 9 oder 10, dadurch gekennzeichnet, daß die Ausgleichsschichten (15) einstückig mit dem die Teilnaben (4,5) gegeneinander abdichtenden Dichtring ausgebildet sind.

12. Schwingungstilger nach einem der Ansprüche 9 bis 11, dadurch gekennzeichnet, daß die Ausgleichsschichten (15) einstückig in Kappenabschnitte (26, 27) übergehen, die zumindest einen Gehäuseteil (6, 7) in einem Teilbereich ersetzen.
